# EUROPEAN PATENT APPLICATION

(11) **EP 2 436 435 A1**
(43) Date of publication of application: **04.04.2012**
(21) Application number: 09845152.9
(22) Date of filing: 20.10.2009
(51) Int. Cl.: B01D 46/52

(54) **FILTER ELEMENT AND DOUBLE-PLEATED AIR FILTER USING SAME**

(30) Priority: 29.05.2009 JP 2009131444
(71) Applicant: Nippon Muki Co., Ltd., Taitou-ku Tokyo 110-0015 (JP)
(72) Inventor: KONNO, Yukihiro, Yuki-shi Ibaraki 307-0046 (JP); WATANABE, Masahiro, Yuki-shi Ibaraki 307-0046 (JP); YAMAGUCHI, Takeki, Yuki-shi Ibaraki 307-0046 (JP); HAYASHI, Shiro, Yuki-shi Ibaraki 307-0046 (JP)
(74) Representative: Körfer, Thomas
(86) International application number: PCT/JP2009/005480
(87) International publication number: WO 2010/137085

(57) **Abstract**

Provided is a double-pleated air filter where filter elements each of which ensures an inter-pleat gap (air passage) by folding filter media in multiple layers and by defining a pitch, a thickness and a folding shape of the filter media are arranged in the V-bank-shaped structure whereby the air filter can be used with a large air volume due to a low pressure drop. In the filter element which keeps an interval between filter media folded in a zigzag shape by an interval maintaining material, a relationship among an interval a (pitch) between a peak portion of a pleat and a peak portion of a pleat arranged adjacent to the pleat, a folded width b of the filter media, an interval c (a center portion gap) between the filter media at center portions of the pleats arranged adjacent to each other (an intermediate position of the folded width b of the filter media), an interval c' (an opening portion gap) between the filter media in the vicinity of peak portions of the pleats arranged adjacent to each other, a thickness d of the filter media, and a width e (a distal end width) of the pleat in the vicinity of the peak portion of the pleat is set such that the relationship satisfies c'/c≥1.1, c'=a-e≥0.45mm, c=a/2-d and e/d≥2.

## Description

### Technical Field

The present invention relates to a filter element formed by folding a filter media and a double-pleated air filter where the filter element is arranged in a V-shape.

### Background Art

Conventionally, patent document 1 discloses a technique which can lower a pressure drop of a double-pleated air filter which is obtained by arranging, in a V-shape, filter elements each of which is formed by folding a filter media in a zigzag shape. In the document, a dust collecting filter is formed by arranging, in a V shape, 5 to 7 sets of filter packs each of which is formed by folding a filter media having a thickness of 0.1 to 0.3mm in a zigzag shape and setting a width size of the folded mini pleats to 10 to 30mm at a pitch size of 1.7 to 3.2mm.
In the dust collecting filter, to prevent a state where a uniform air permeation cannot be obtained over the whole surface of the filter media due to a contact of filter packs arranged adjacent to each other or the increase of flow resistance because of a shape such as a small pitch of the filter packs, the filter packs are configured such that a filtration area is increased by setting the pitch of the filter packs small and setting a width size of the filter packs large, and the filter packs are arranged in a V-shape. Due to such a constitution, the dust collecting filter can ensure dust collection efficiency conforming to the filtration area by overcoming the drawback that dust collection efficiency conforming to the filtration area cannot be acquired.

### Prior Art Document

### Patent Document

Patent document 1: International Publication 2003/043717

### Summary of the Invention

### Problems that the Invention is to solve

The filter element described in patent document 1 can ensure dust collection efficiency conforming to a filter media area by defining a thickness, a folded width size and a pitch size of the filter media. That is, according to patent document 1, the filter element efficiently makes use of the filter media area thus contributing to the lowering of pressure drop of the filter element.
However, the filter element is not designed by taking into account a pleat shape of the filter media for forming the filter element, and more particularly a gap formed between pleats arranged adjacent to each other through which air passes. Accordingly, the lowering of pressure drop is insufficient in terms of the filter element.
In view of the above, it is an object of the present invention to provide a double-pleated air filter which can lower a pressure drop by reviewing a shape of pleats of a filter media for forming a filter element, and more particularly by reviewing a gap formed between pleats arranged adjacent to each other.

### Means for solving the Problem

In an attempt to overcome the above-mentioned drawbacks, the inventors of the present invention have found that the above-mentioned drawbacks can be overcome by reviewing a shape of pleats of a filter media for forming a filter element, and more particularly by reviewing a gap formed between pleats arranged adjacent to each other.
The filter element of the present invention is made based on such a finding, and a first embodiment is directed to a filter element which keeps an interval between filter media folded in a zigzag shape by an interval maintaining material, wherein a relationship among an interval a (pitch) between a peak portion of a pleat and a peak portion of a pleat arranged adjacent to the pleat, a folded width b of the filter media, an interval c (a center portion gap) between the filter media at center portions (an intermediate position of the folded width b of the filter media) of the pleats arranged adjacent to each other, an interval c' (an opening portion gap) between the filter media in the vicinity of peak portions of the pleats arranged adjacent to each other, a thickness d of the filter media, and a width e (a distal end width) of the pleat in the vicinity of the peak portion of the pleat is set such that the relationship satisfies c'/c≥1.1, c'=a-e≥0.45mm, c=a/2-d and e/d≥2.
Further, the filter element of a second embodiment is, in the filter element of the first embodiment, **characterized in that** the interval a (pitch) between the peak portions is set to 1.45 to 2.30mm, the folded width b is set to 15 to 40mm, the interval c (center portion gap) is set to 1.0mm or less, the thickness d of the filter media is set to 0.15 to 0.30mm, and the width e (distal end width) of the pleat is set to 0.85mm or less.
Further, the filter element of a third embodiment is, in the filter element of the first embodiment or the second embodiment, **characterized in that** the interval maintaining material is made of a hot melt resin or a foamed resin, and the interval maintaining material is formed on a front surface of the filter media on an upstream side and a downstream side of a folded portion of the filter media except for an inner surface of the folded portion.
Further, a double-pleated air filter of a fourth embodiment is **characterized in that** a structural body is formed by arranging a plurality of filter elements of the first embodiment in a V-shape by bringing end portions of the filter element on an upstream side and/or a downstream side into contact with each other, and n sets of structural bodies are arranged parallel to each other and are housed in a filter frame, wherein the interval a (pitch) between the peak portions, the folded width b and the number of sets n of the V-shaped structural bodies are set to satisfy a relationship of 60 ≤ b × n/a ≤ 125.

### Advantageous effect of the Invention

According to the filter element of the present invention, the relationship among the interval a (pitch) between the peak portion of the pleat and the peak portion of the pleat arranged adjacent to the pleat, the folded width b of the filter media, the interval c (the center portion gap) between the filter media at the center portions (the intermediate position of the folded width b of the filter media) of the pleats arranged adjacent to each other, the interval c' (the opening portion gap) between the filter media in the vicinity of the peak portions of the pleats arranged adjacent to each other, the thickness d of the filter media, and the width e (the distal end width) of the pleat in the vicinity of the peak portion of the pleat is set such that the relationship satisfies c' /c≥1.1, c'=a-e≥0.45mm, c=a/2-d and e/d≥2. Accordingly, the shape of the pleats forms a gentle V shape where the pleats extend inward from an inlet side of a flow passage so that a gap is ensured between the pleats whereby a pressure drop can be lowered.
Further, by setting the interval a (pitch) between the peak portions is set to 1.45 to 2.30mm, the folded width b of the filter media is set to 15 to 40mm, the interval c (center portion gap) is set to 1.0mm or less, the thickness d of the filter media is set to 0.15 to 0.30mm, and the width e (distal end width) of the pleat is set to 0.85mm or less, a pressure drop can be lowered by approximately 10% or more compared with a general-purpose filter element which is manufactured by a filter media having a thickness of approximately 0.4mm for a conventional HEPA filter.
Further, by forming the interval maintaining material such as the ribbon material intermittently without forming the interval maintaining material in the vicinity of the inside of the folded portions (crest portions and valley portions), a width of the pleat can be set small so that a gap between the peak portions of the pleats can be widened and the reduction of an area of an air permeation portion of the filter media by a ribbon material or the like can be made small whereby the stable pressure drop can be maintained.
Further, according to the double-pleated air filter of the present invention, in the double-pleated air filter where the filter elements are received by a receiving member and are formed into a V shape thus forming the V-shaped structural body, and n sets of V-shaped structural bodies are arranged parallel to each other and are fixed by upper and lower filter frames, the interval a (pitch) between the peak portions, the folded width b and the number of sets n of the V-shaped structural bodies are set to satisfy a relationship of 60 ≤ b × n/a ≤ 125. Accordingly, the double-pleated air filter can ensure a sufficient filter media area for maintaining efficiency as the HEPA filter and, at the same time, can largely lower a pressure drop of the filter.

### Brief Description of the Drawings

Fig. 1 is an enlarged cross-sectional view of an essential part of a filter media for a filter element according to one embodiment of the present invention.
Fig. 2 is an enlarged cross-sectional view of an essential part of a filter pack.
Fig. 3 is an explanatory view of a double-pleated air filter according to one embodiment of the present invention.
Fig. 4 is a characteristic view showing the relationship between C'/C and C.
Fig. 5 is a characteristic view showing the relationship between pressure drop due to the structure of the filter element and an opening portion gap (b=20mm).

### Mode for Carrying out the Invention

Hereinafter, the best mode for carrying out the present invention is explained.

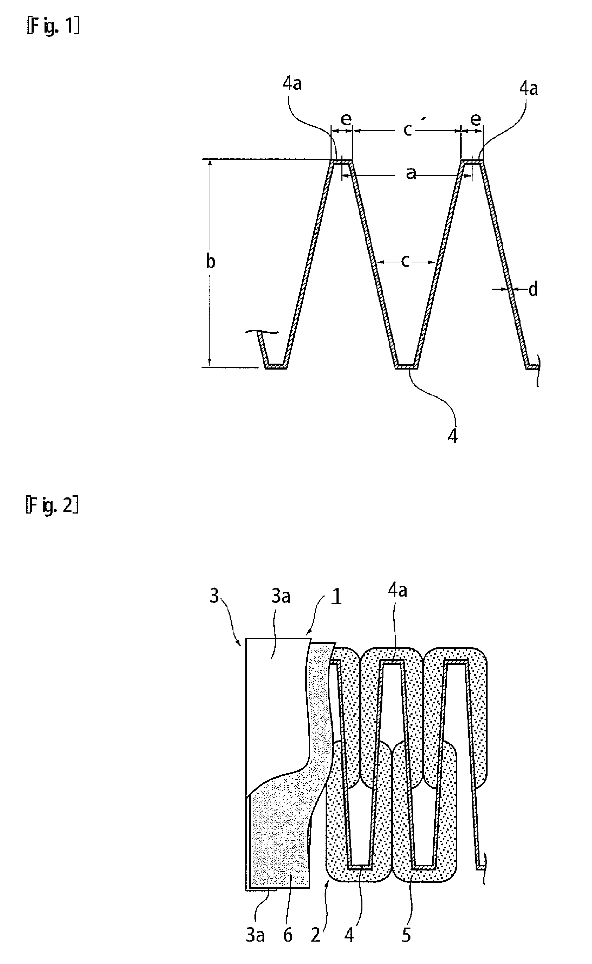

Fig. 1 is an enlarged cross-sectional view of an essential part of a filter media used for forming a filter element according to one embodiment of the present invention. In the drawing, symbol 4 indicates filter media, symbol a indicates an interval (pitch) between a peak portion of a pleat and a peak portion of a pleat arranged adjacent to the pleat in the filter media 4, symbol b indicates a folded width of the filter media 4, symbol c indicates an interval (a center portion gap) between the filter media 4 at center portions (an intermediate position of the folded width b of the filter media 4) of the pleats arranged adjacent to each other, symbol c' indicates an interval (an opening portion gap) between the filter media in the vicinity of peak portions of the pleats arranged adjacent to each other, symbol d indicates a thickness of the filter media 4, and symbol e indicates a width (a distal end width) of the pleat in the vicinity of the peak portion of the pleat.
The filter element of this embodiment is, as indicated by symbol 1 in Fig. 2, constituted of a filter pack 2 and a filter frame 3. In the filter pack 2, the filter media 4 are folded in a zigzag shape, and an interval between folded crest portions 4a, 4a of the filter media 4 is kept by interval maintaining material 5. The filter pack 2 is hermetically fixed between upper and lower frames 3a, 3a of the filter frame 3 by way of a sealing agent 6.

With respect to a grade of the air filter of this embodiment, this embodiment is for a high-performance particle removing filter capable of treating particles having a size of 0.3µm with removal efficiency of 99.97% or more.

A material for forming the filter media 4 is not particularly limited. For example, a single nonwoven fabric made of glass fibers, synthetic fibers or the like, a PTFE resin film filter or a composite nonwoven fabric formed by reinforcing a melt-blow nonwoven fabric with a nonwoven fabric, or the like can be used. A material which can treat particles having a size of 0.3µm with removal efficiency of 99.97% or more at air velocity in the filter can be used for forming the filter media 4.

Further, a material for forming the interval maintaining material 5 is not particularly limited and, for example, a ribbon material made of a hot melt resin, a urethane foamed resin or the like can be used.
The interval maintaining material 5 can be formed on both surfaces of or on one surface of the filter media 4 in a solid line state (continuously) or in a broken line state (intermittently) along the flow direction of air. To fold the interval maintaining material 5 in straight line shape of the filter media 4 and to reduce a resistance on a downstream side, as shown in Fig. 2, it is preferable to intermittently form the interval maintaining material 5 without forming the interval maintaining material 5 in the vicinity of the inside of the folded portions (crest portions and valley portions).

A material for forming the sealing agent 6 is not particularly limited provided that the material can ensure air-tightness between the filter pack 2 and the filter frame 3, and a urethane resin, an epoxy resin or the like can be used as the material.

In this embodiment, the following parameters (1) to (5) of the filter element 1 have the relationship expressed by the following conditions (A) to (D).

### 1. Parameters

(1) the interval a (pitch) between the peak portion of the pleat and a peak portion of the pleat arranged adjacent to the pleat
(2) the folded width b of the filter media
(3) the interval c (the center portion gap) between the filter media at the center portions (the intermediate position of the folded width b of the filter media) of the pleats arranged adjacent to each other
(4) the interval c' (an opening portion gap) between the filter media in the vicinity of the peak portions of the pleats arranged adjacent to each other
(5) the thickness d of the filter media and the width e (the distal end width) of the pleat in the vicinity of the peak portion of the pleat

### 2. Condition

(A) c' /c≥1.1
(B) c'≥0.45mm
(C) c=a/2-d
(D) e/d≥2

The preferable pressure drop is obtained when the interval c' (an opening portion gap) is defined by c'=a-e, and c' /c and c' falls within a range where c' /c is 1.1 or more and c' is 0.45mm or more.
The above-mentioned formula implies that, in folding the filter media 4 having a small thickness in a predetermined volume, to prevent the increase of the pressure drop, it is necessary to ensure an air permeation passage at the fixed intervals c' (the opening portion gaps). That is, the air permeation passage at the fixed interval c' is effective in lowering the pressure drop.
Further, when e/d is less than 2, the crest portion collapses thus increasing the pressure drop. Further, there is a high possibility that the filter media 4 is damaged or is torn thus deteriorating an appearance of the filter media 4.

Further, the filter element 1 of this embodiment is not particularly limited provided that the filter element 1 has sizes which satisfy the above-mentioned relationship. However, it is preferable that the interval a (pitch) between the peak portion of the pleat and the peak portion of the pleat arranged adjacent to the pleat is set to 1.45 to 2.30mm, the folded width b of the filter media 4 is set to 15 to 40mm, the interval c (the center portion gap) between the filter media at the center portions (at the intermediate position of the folded width b of the filter media) of the pleats arranged adjacent to each other in the filter media 4 is set to 1.0mm or less, the thickness d of the filter media 4 is set to 0.15 to 0.30mm, and the width e (the distal end width) of the pleat in the vicinity of the peak portion of the pleat is set to 0.85mm or less.

The pitch a is obtained such that 10 pleats of the filter media 4 are set as 1 group, and an operation for taking an average value of pitches in 1 group is performed with respect to 5 groups or more and, thereafter, the obtained average values are averaged so as to obtain the pitch. The folded width b is a value obtained by measuring a width from a folding point of the crest portion to a folding point of the crest portion. As the interval c (the center portion gap) and the opening portion gap c' (opening portion gap), values which are defined by the pitch a, the folded width b and the distal end width e and values calculated using the above-defined formulae are used.
With respect to the width e of the pleat at the position in the vicinity of the peak of the pleat (the distal end width), the peak portion 4a is sandwiched by a vernier caliper and the vernier caliper is moved in the direction that the folded mountain continuously extends. A width allowing smooth movement by 1mm or more in the direction that folded mountain continuously extends is measured while changing a measurement width of the vernier caliper by every 0. 05 mm, and the measured value is used as the width e.

Next, the explanation is made with respect to a double-pleated air filter according to the embodiment of the present invention which is formed using the above-mentioned filter element.

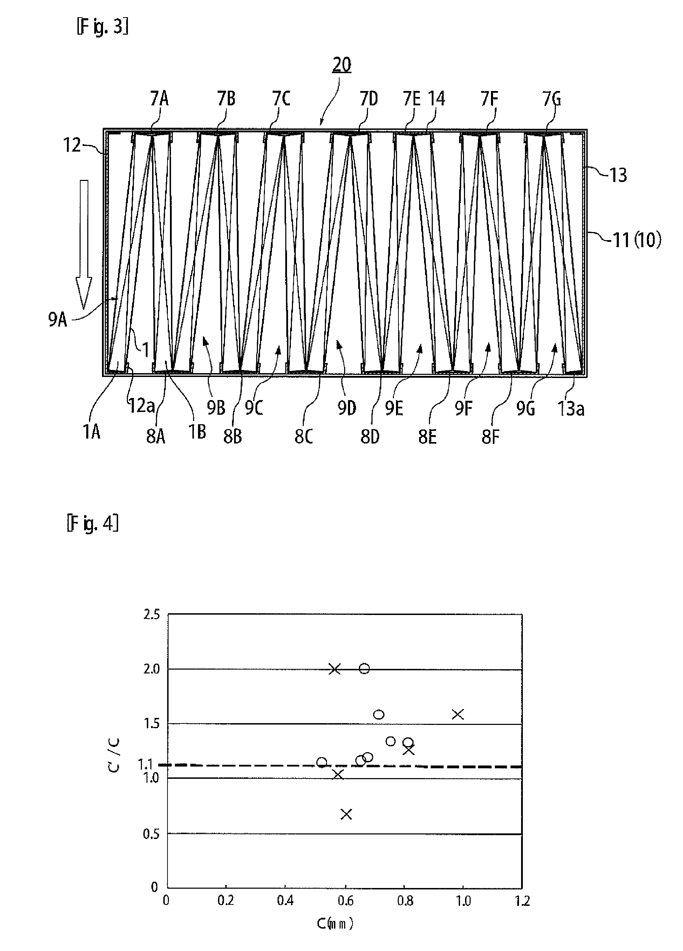

Fig. 3 is a cross-sectional view of a double-pleated air filter 20.
In the double-pleated air filter 20, the plurality of filter elements 1 which are arranged adjacent to each other are arranged in a V shape by bringing end portions of the filter elements 1 on an upstream side and/or a downstream side into contact with each other thus forming structural bodies 9A to 9G. Upper and lower surfaces of the V-shaped structural bodies 9A to 9G which cover the whole air permeation surface are fixed to upper and lower filter frames 10, 11 by way of a sealing agent, and right and left side surfaces are fixed to filter side frames 12, 13 by way of the sealing agent.
Distal end portions of the V-shaped structural bodies 9A to 9G are fixed to the inside of grooves of upstream-side receiving members 7A to 7G and downstream-side receiving members 8A to 8F each of which is provided with a groove. In each groove, although not shown in the drawing, an abutting part is provided with a sealing agent.
Here, end portions of the filter side frames 12, 13 in a downstream side respectively have folded-back portions 12a, 13a each of which has a U-shaped cross section, and downstream-side end portions of the filter elements 1 are fixed to the inside of U-shaped grooves by way of the sealing agent.

With respect to the double-pleated air filter of the embodiment, the filter element having the constitution explained above forms one set of V-shaped structural body, and when n sets of V-shaped structural bodies are arranged parallel to each other, the interval a (pitch) between the peak portions of the filter elements, the folded width b of the filter element and the number of sets n of the V-shaped structural body are set to satisfy the relationship of 60≤bxn/a≤125.
Due to such a constitution, the air filter of this embodiment can ensure a sufficient filter media area for maintaining efficiency as a HEPA filter and, at the same time, the pressure drop of the filter can be largely dropped. Here, "n" in the n sets of the V-shaped structural body means an integer of 2 or more, and is preferably 3 to 12.

The filter frame 3 of the filter element according to the present invention, the side frames 12, 13 of the double-pleated air filter, and the receiving members 7A to 7G, 8A to 8F of the present invention may be made of metal such as stainless steel, aluminum or a Galvalume steel sheet or a synthetic resin such as polypropylene.

### Example

Next, an example of the double-pleated air filter of the present invention is explained along with a conventional example and comparison examples.
As examples 1 to 7 and comparison examples 1 to 4, double-pleated air filters are manufactured under conditions shown in the following Table 1. Filter elements 1 having sizes of 280mm (a longitudinal size of a profile) × 600mm (a lateral size) × 15 to 40mm (folded width) are prepared using a glass-fiber-made filter media which exhibits a pressure drop of 265Pa (under a condition of 5.3cm/s) and filtration efficiency of 99.97% or more (at 0.2 to 0.5µm). Side surfaces of the prepared filter elements 1 are surrounded by steel-plate-made filter frames 11 to 14 by way of a urethane resin sealing agent thus manufacturing a double-pleated air filter having a profile size of 610mm (a longitudinal size) × 610mm (a lateral size) × 290mm (a depth size).
Further, as a conventional example 1, a double-pleated air filter is manufactured in the same manner as the above-mentioned examples and the like except for that this embodiment uses a glass-fiber-made filter media having a thickness d of 0.40mm, a pressure drop of 265Pa (under the condition of 5.3cm/s) and filtration efficiency of 99.97% or more.
Here, the number of banks in Table 1 means the number of V-shaped structural bodies where two filter packs 1 are formed as one set of V-shaped structural body.
Next, evaluation of performance on a pressure drop is made with respect to the respective double pleated air filters of the examples, the conventional example and the comparison examples described above.
The pressure drop is measured by a method where an air permeation condition is under 70m³/min (surface velocity 3.14m/s) in accordance with JIS B9908.8.1.2.

**Table 1**

| No | Pitch (a) (mm) | Evaluation | Folded width (b) (mm) | Number of banks (n) | Thickness of filter media (d) (mm) | Evaluation | Distal end width (e) (mm) | Evaluation | Center portion gap (c) a/2-d (mm) | Evaluation | Opening portion gap (c') a-e (mm) | Evaluation | Size index | | Pressure drop (Pa) of filter | Evaluation | b/axn | Evaluation |
|---|---|---|---|---|---|---|---|---|---|---|---|---|---|---|---|---|---|---|
| | | 1.45≤a≤2.30 | | | | 0.15≤d≤0.30 | | e≤0.85 | | (a/2-d)≤1.0 | | 0.45≤(a-e) | c'/c | 1.1≤C'/C | | Pressure drop≤245Pa | | 60≤b/axn≤125 |
| Example 1 | 1.93 | good | 20 | 8 | 0.15 | good | 0.85 | good | 0.82 | good | 1.08 | good | 1.33 | good | 245 | good | 82.8 | good |
| Example 2 | 1.93 | good | 40 | 4 | 0.30 | good | 0.6 | good | 0.67 | good | 1.33 | good | 2.00 | good | 245 | good | 82.8 | good |
| Example 3 | 1.93 | good | 20 | 7 | 0.25 | good | 0.8 | good | 0.72 | good | 1.13 | good | 1.58 | good | 242 | good | 72.4 | good |
| Example 4 | 1.81 | good | 15 | 11 | 0.15 | good | 0.8 | good | 0.76 | good | 1.01 | good | 1.34 | good | 233 | good | 91.0 | good |
| Example 5 | 1.45 | good | 30 | 6 | 0.20 | good | 0.85 | good | 0.53 | good | 0.60 | good | 1.14 | good | 238 | good | 124.1 | good |
| Example 6 | 1.61 | good | 20 | 8 | 0.15 | good | 0.85 | good | 0.66 | good | 0.76 | good | 1.16 | good | 226 | good | 99.3 | good |
| Example 7 | 1.66 | good | 20 | 8 | 0.15 | good | 0.85 | good | 0.68 | good | 0.81 | good | 1.19 | good | 224 | good | 96.6 | good |
| Conventional example 1 | 2.76 | good | 20 | 8 | 0.40 | bad | 1.2 | good | 0.98 | good | 1.56 | good | 1.59 | good | 295 | bad | 57.9 | bad |
| Comparison example 1 | 1.93 | good | 20 | 8 | 0.15 | good | 0.9 | bad | 0.82 | good | 1.03 | good | 1.27 | good | 250 | bad | 82.8 | good |
| Comparison example 2 | 1.93 | good | 40 | 4 | 0.40 | bad | 0.8 | good | 0.57 | good | 1.13 | good | 2.00 | good | 250 | bad | 82.8 | good |
| Comparison example 3 | 1,61 | good | 30 | 6 | 0.20 | good | 1.2 | bad | 0.61 | good | 0.41 | bad | 0.68 | bad | 260 | bad | 111.7 | good |
| Comparison example 4 | 1.45 | wood | 40 | 4 | 0.15 | good | 0.85 | good | 0.58 | good | 0.60 | good | 1.04 | bawd | 248 | bad | 110.3 | good |

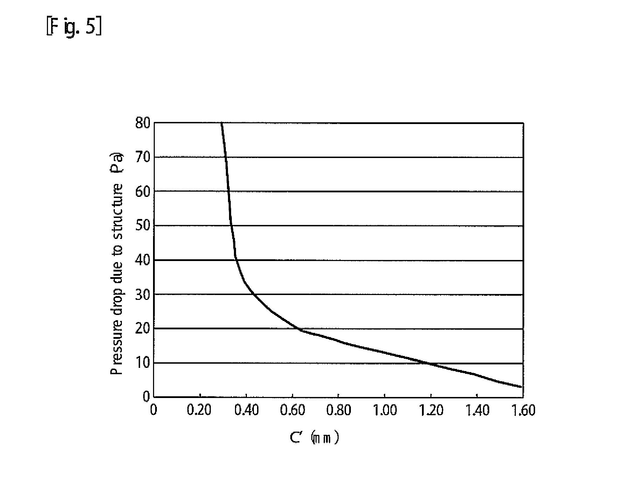

As can be understood from Table 1, when a size index falls within a range of c'/c≥1.1, a pressure drop lowering effect can be enhanced by approximately 20 percent compared to 295Pa which is a pressure drop of the conventional example 1.
From the example 1 and the comparison example 1, it is confirmed that when the distal end width e exceeds 0.85mm, a gap of the opening portion is narrowed so that a pressure drop due to the structure of the filter element is large whereby a pressure drop lowering effect cannot be acquired even when the pitch is made small (see Fig. 5).
From the example 2 and the comparison example 2, it is confirmed that when the thickness d of the filter media exceeds 0.30mm, the distal end width is also increased along with the increase of the thickness of the filter media so that a sufficient gap cannot be ensured whereby pressure drop due to the structure of the filter element is increased. It is also confirmed that when the thickness d of the filter media is not 0. 30mm or less, a shape of a folded distal end is deteriorated (distal end width: 0. 85mm or more) so that a pressure drop due to the structure is increased.
Further, as shown in Fig. 4 where the relationship between c and c'/c in the examples and the like are plotted (examples: plotted by a circle, comparison examples and conventional example: plotted by ×), the comparison example 3 and the comparison example 4 do not satisfy c' /c≥1.1 so that the comparison example 3 and the comparison example 4 do not satisfy the pressure drop of 245Pa or less. Particularly, in the comparison example 3, the opening portion gap is 0.45mm or less so that the pressure drop due to the structure is drastically increased (see Fig. 5).
When a filter media which has a low pressure drop is used as the filter media of the embodiment, the pressure drop of the filter can be further lowered.

### Industrial applicability

According to the present invention, by lowering the pressure drop of the filter element, the air filter which can be used under a large air volume is provided. The present invention is also applicable to an ordinary air filter which does not have the double-pleat structure and hence, the present invention has industrial applicability.

### Description of Reference Numerals and Signs

- 1:: filter element
- 2:: filter pack
- 3:: filter frame
- 3a:: upper and lower frames
- 4:: filter media
- 4a:: folded crest portion
- 5:: interval maintaining material
- 6:: sealing agent
- 7:: upstream-side receiving member
- 8:: downstream-side receiving member
- 9:: V-shaped structural body
- 10, 11:: upper filter frame, lower filter frame
- 12, 13:: filter side frame
- 20:: double-pleated air filter
- a:: An interval (pitch) between peak portions
- b:: folded width of filter media
- c:: interval between filter media (center portion gap)
- c':: interval between filter media (opening portion gap)
- d:: thickness of filter media
- e:: width of pleat (distal end width)

## Claims

1. A filter element which keeps an interval between filter media folded in a zigzag shape by an interval maintaining material, wherein a relationship among an interval a (pitch) between a peak portion of a pleat and a peak portion of a pleat arranged adjacent to the pleat, a folded width b of the filter media, an interval c (a center portion gap) between the filter media at center portions of the pleats arranged adjacent to each other (an intermediate position of the folded width b of the filter media), an interval c' (an opening portion gap) between the filter media in the vicinity of peak portions of the pleats arranged adjacent to each other, a thickness d of the filter media, and a width e (a distal end width) of the pleat in the vicinity of the peak portion of the pleat is set such that the relationship satisfies c' /c>≥1.1, c'=a-e≥0.45mm, c=a/2-d and e/d≥2.

2. The filter element according to claim 1, wherein the interval a (pitch) between the peak portions is set to 1.45 to 2.30mm, the folded width b of the filter media is set to 15 to 40mm, the interval c (center portion gap) is set to 1.0mm or less, the thickness d of the filter media is set to 0.15 to 0.30mm, and the width e (distal end width) of the pleat is set to 0.85mm or less.

3. The filter element according to claim 1 or 2, wherein the interval maintaining material is made of a hot melt resin or a foamed resin, and the interval maintaining material is formed on a front surface of the filter media exposed on an upstream side and a downstream side of a folded portion of the filter media except for an inner surface of the folded portion.

4. A double-pleated air filter, wherein a structural body is formed by arranging a plurality of filter elements according to claim 1 in a V-shape by bringing end portions of the filter element on an upstream side and/or a downstream side into contact with each other, and n sets of structural bodies are arranged parallel to each other and are housed in a filter frame, wherein the interval a (pitch) between the peak portions, the folded width b and the number of sets n of the V-shaped structural bodies are set to satisfy a relationship of 60 ≤ b × n/a ≤ 125.
